# EUROPEAN PATENT SPECIFICATION

(11) **EP 4 418 455 B1**
(45) Date of publication and mention of the grant of the patent: **30.09.2026**
(21) Application number: 22895891.4
(22) Date of filing: 27.10.2022
(51) Int. Cl.: H01Q 1/24, H04M 1/02, H01Q 5/378, H01Q 1/40, H01Q 9/42

(54) **ANTENNA AND ELECTRONIC APPARATUS COMPRISING SAME**
ANTENNE UND ELEKTRONISCHE VORRICHTUNG DAMIT
ANTENNE ET APPAREIL ÉLECTRONIQUE LA COMPRENANT

(30) Priority: 17.11.2021 KR 20210158492; 26.11.2021 KR 20210165058
(43) Date of publication of application: 21.08.2024
(73) Proprietor: Samsung Electronics Co., Ltd., Suwon-si, Gyeonggi-do 16677 (KR)
(72) Inventor: MOON, Jesun, Suwon-si, Gyeonggi-do 16677 (KR); KO, Kyungbae, Suwon-si, Gyeonggi-do 16677 (KR); KIM, Jaehyung, Suwon-si, Gyeonggi-do 16677 (KR); KIM, Taegyu, Suwon-si, Gyeonggi-do 16677 (KR); LEE, Hanbin, Suwon-si, Gyeonggi-do 16677 (KR); HAN, Sangmin, Suwon-si, Gyeonggi-do 16677 (KR)
(74) Representative: HGF
(86) International application number: PCT/KR2022/016608
(87) International publication number: WO 2023/090683

(56) References cited:
- KR-A- 20160 013 136
- KR-A- 20200 008 644
- KR-A- 20210 079 998
- US-A1- 2013 127 674
- US-A1- 2014 361 948
- US-A1- 2016 351 995
- US-A1- 2018 219 294
- US-A1- 2018 375 196
- US-A1- 2020 021 010

## Description

### [Technical Field]

Various embodiments of the disclosure relate to an antenna and an electronic device including the same.

### [Background Art]

Electronic devices are gradually becoming smaller and slimmer, while the functions thereof are gradually being diversified. As the electronic devices are becoming smaller and slimmer, metal materials (e.g., conductive parts or a metal materials) may be used for the purpose of reinforcing rigidity and/or performing predetermined functions (e.g., an antenna function). Because the use of these metal materials increases production costs and may cause design constraints, electronic devices may include housing structures (e.g., lateral members, frame members, or side bezels) formed at least in part from different materials.
US 2020021010A1 relates to a wideband antenna in a mobile device. US 20140361948A1 relates to an antenna system comprising of an electric power feeding element and a radiating element arranged in a three dimensional space with respect to a circuit board. US 20130127674A1 relates to a monopole antenna, the radiator of which follows by shape the outer cover of a device, the antenna being applicable especially to small mobile stations. US 20180219294A1 relates to wideband antennas with integrated data ports

### [Disclosure]

### [Technical Problem]

An electronic device may include a housing structure (or housing) to provide a space for accommodating electronic components. The housing structure may include a first plate (e.g., a front surface cover), a second plate (e.g., a rear surface cover) placed opposite to the first plate, and a lateral member placed to surround the space between the first plate and the second plate. The lateral member may include a support member (or an extension member) that extends at least partially into the inner space of the electronic device. This lateral member may be at least partially made of a metal material (e.g., a conductive member, a conductive portion, or a conductive material) to reinforce the rigidity of the electronic device and/or to execute a predetermined function (e.g., an antenna function), and the remaining portions of the lateral member may be made of a polymer material (e.g., a non-conductive member, a non-conductive portion, or a non-conductive material) combined with the metal material.

The electronic device may include a lateral member (e.g., a frame member) made of a different material that forms at least a portion of the exterior (e.g., the side surface) of the electronic device by being coupled to at least a portion of the lateral member. In order to provide an attractive appearance and reduce manufacturing costs of the electronic device, this side member may include non-conductive members (e.g., injection-molded products) and a conductive metal (e.g., a conductive member) coupled to the injection-molded products and arranged to be invisible from the outside. The conductive members may help reinforce the rigidity of the electronic device.

However, since the conductive members are disposed inside the injection molded products, the separation distance from an antenna structure disposed inside the electronic device is reduced, which may deteriorate the radiation performance of antenna. In addition, in the arrangement structure in which electronic components that need to detect the external environment correspond to at least one opening provided in the lateral member, it may be difficult for an antenna structure alone in the corresponding portion of a relatively thin conductive member.

Various embodiments of the disclosure may provide an antenna configured to reduce degradation in radiation performance even when at least a portion of a conductive member used as a lateral member is close to an antenna structure, and an electronic device including the same.

Various embodiments may provide an antenna that may help improve radiation performance by using a portion of a conductive member used as a lateral member, and an electronic device including the same.

However, the problems to be solved in the disclosure are not limited to the above-mentioned problems, and may be variously expanded without departing from the scope of the disclosure.

### [Technical Solution]

The present invention is defined by the independent claim. Further aspects of the present invention are outlined in the dependent claims. According to various embodiments, an electronic device includes a housing including a lateral member including a conductive member and a non-conductive member coupled to the conductive member, a conductive portion split from the conductive member through at least one split portion, an antenna structure disposed in an inner space of the housing to be at least partially capacitively coupled to the conductive portion, and a wireless communication circuit configured to transmit or receive a wireless signal in at least one predetermined frequency band via the antenna structure and the conductive portion. The lateral member includes an opening provided through at least a portion of the conductive member. The conductive portion is disposed to be invisible from the outside through the non-conductive member, on at least a portion of the conductive member provided with the opening.

### [Advantageous Effects]

The electronic device according to exemplary embodiments of the present disclosure has an arrangement structure in which at least a portion of a conductive member used as a side member is disposed to be coupled to the antenna structure. As a result, deterioration in the radiation performance of the antenna can be reduced.

Various other effects identified directly or indirectly through the disclosure can be provided.

### [Description of Drawings]

In connection with the description of the drawings, the same or similar components may be denoted by the same or similar reference numerals.
FIG. 1 is a block diagram of an electronic device according to various embodiments of the disclosure in a network environment.
FIG. 2A is a perspective view of the electronic device according to various embodiments of the disclosure.
FIG. 2B is a rear perspective view of the electronic device according to various embodiments of the disclosure.
FIG. 3 is an exploded perspective view of the electronic device according to various embodiments of the disclosure.
FIG. 4A is a configuration view of an electronic device viewed from the rear according to various embodiments of the disclosure.
FIG. 4B is a view illustrating the state of an antenna carrier disposed in the electronic device of FIG. 4A according to various embodiments of the disclosure.
FIG. 5A is a cross-sectional view of a portion of the electronic device according to various embodiments of the disclosure taken along line 5a-5a in FIG. 4B.
FIG. 5B is a perspective view of a portion of a conductive member according to various embodiments of the disclosure.
FIG. 5C is a view schematically illustrating the arrangement structure of an antenna structure and a conductive member according to various embodiments of the disclosure.
FIG. 6A is a configuration view of a portion of a lateral member in which a conductive member and a non-conductive member are coupled to each other near an antenna structure according to various embodiments of the disclosure.
FIG. 6B is a view illustrating an arrangement structure of a socket and a tray member according to various embodiments of the disclosure.
FIG. 7 is a graph comparing the radiation performances of an antenna before and after disposing a conductive portion for coupling according to various embodiments of the disclosure.
FIG. 8 is a cross-sectional view of a portion of an electronic device according to various embodiments of the disclosure.
FIG. 9A is a view schematically illustrating the arrangement structure of an antenna structure and a conductive member according to various embodiments of the disclosure.
FIG. 9B is a graph showing changes in radiation performance of the antenna of FIG. 9A in response to the operation of the switching circuit according to various embodiments of the disclosure.
FIG. 10A is a view schematically illustrating the arrangement structure of an antenna structure and a conductive member according to various embodiments of the disclosure.
FIG. 10B is a perspective view of a portion of the conductive member of FIG. 10A according to various embodiments of the disclosure.
FIG. 10C is a graph comparing the radiation performances of an antenna before and after disposing a conductive portion for coupling according to various embodiments of the disclosure.
FIG. 11A is a view schematically illustrating the arrangement structure of an antenna structure and a conductive member according to various embodiments of the disclosure.
FIG. 11B is a perspective view of a portion of the conductive member of FIG. 11A according to various embodiments of the disclosure.
FIG. 11C is a graph comparing the radiation performances of an antenna before and after disposing a conductive portion for coupling according to various embodiments of the disclosure.
FIG. 12A is a view schematically illustrating the arrangement structure of an antenna structure and a conductive member according to various embodiments of the disclosure.
FIG. 12B is a graph showing changes in radiation performance of the antenna of FIG. 12A in response to the operation of the switching circuit according to various embodiments of the disclosure.
FIG. 13 is a view schematically illustrating the arrangement structure of an antenna structure and a conductive member according to various embodiments of the disclosure.
FIG. 14 is a configuration view of an electronic device illustrating an arrangement structure of a conductive portion provided via an opening and a split portion and an antenna according to various embodiments of the disclosure.

### [Mode for Invention]

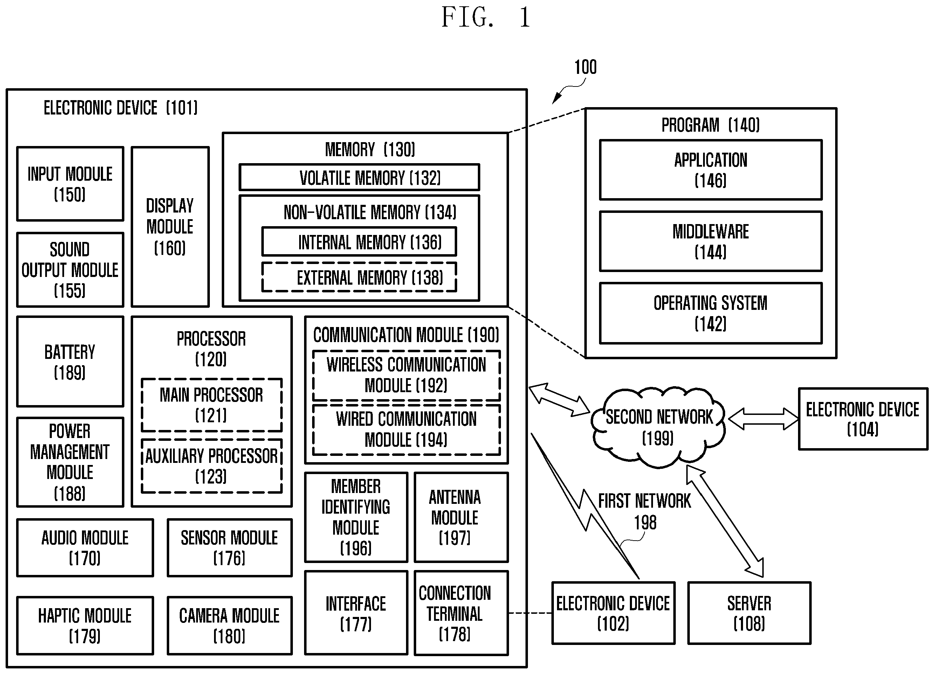

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or 450
a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

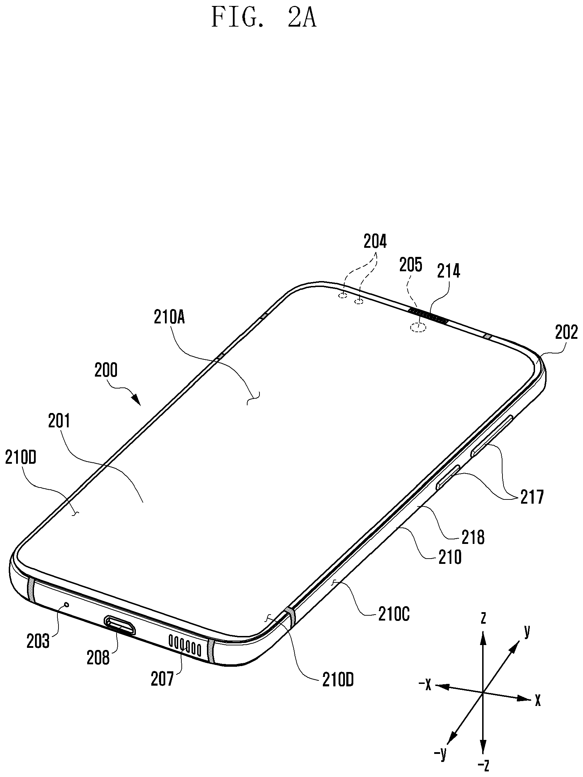

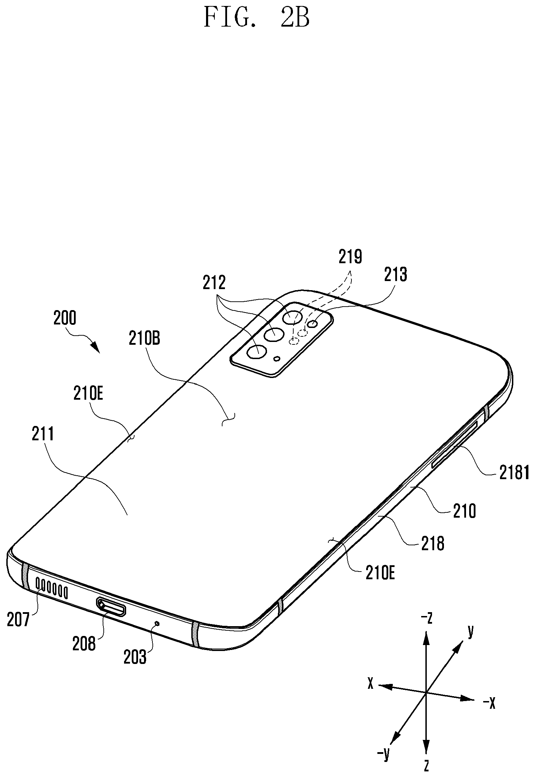

FIG. 2A is a front perspective view of an electronic device 200 according to various embodiments, and FIG. 2B is a rear perspective view of a rear surface of the electronic device 200 shown in FIG. 2A according to various embodiments.

The electronic device 200 in FIGS. 2A and 2B may be at least partially similar to the electronic device 101 in FIG. 1 or may further include other embodiments.

Referring to FIGS. 2A and 2B, the electronic device 200 may include a housing 210 that includes a first surface (or front surface) 210A, a second surface (or rear surface) 210B, and a lateral surface 210C that surrounds a space between the first surface 210A and the second surface 210B. The housing 210 may refer to a structure that forms a part of the first surface 210A, the second surface 210B, and the lateral surface 210C. The first surface 210A may be formed of a front plate 202 (e.g., a glass plate or polymer plate coated with a variety of coating layers) at least a part of which is substantially transparent. The second surface 210B may be formed of a rear plate 211 which is substantially opaque. The rear plate 211 may be formed of, for example, coated or colored glass, ceramic, polymer, metal (e.g., aluminum, stainless steel (STS), or magnesium), or any combination thereof. The lateral surface 210C may be formed of a lateral bezel structure (or "lateral member") 218 which is combined with the front plate 202 and the rear plate 211 and includes a metal and/or polymer. The rear plate 211 and the lateral bezel structure 218 may be integrally formed and may be of the same material (e.g., a metallic material such as aluminum).

The front plate 202 may include two first regions 210D disposed at long edges thereof, respectively, and bent and extended seamlessly from the first surface 210A toward the rear plate 211. Similarly, the rear plate 211 may include two second regions 210E disposed at long edges thereof, respectively, and bent and extended seamlessly from the second surface 210B toward the front plate 202. The front plate 202 (or the rear plate 211) may include only one of the first regions 210D (or of the second regions 210E). The first regions 210D or the second regions 210E may be omitted in part. When viewed from a lateral side of the electronic device 200, the lateral bezel structure 218 may have a first thickness (or width) on a lateral side where the first region 210D or the second region 210E is not included, and may have a second thickness, being less than the first thickness, on another lateral side where the first region 210D or the second region 210E is included.

The electronic device 200 may include at least one of a display 201, audio modules 203, 207 and 214, sensor modules 204 and 219, camera modules 205, 212 and 213, a key input device 217, a light emitting device, and connector holes 208 and 209. The electronic device 200 may omit at least one (e.g., the key input device 217 or the light emitting device) of the above components, or may further include other components.

The display 201 may be visible through a substantial portion of the front plate 202, for example. At least a part of the display 201 may be visible through the front plate 202 that forms the first surface 210A and the first region 210D of the lateral surface 210C. The display201 may be combined with, or adjacent to, a touch sensing circuit, a pressure sensor capable of measuring the touch strength (pressure), and/or a digitizer for detecting a stylus pen. At least a part of the sensor modules 204 and 219 and/or at least a part of the key input device 217 may be disposed in the first region 210D and/or the second region 210E.

According to certain embodiments, the input device 203 may include at least one microphone. In certain embodiments, the input device 203 may include a plurality of microphones disposed to detect the direction of a sound. According to an embodiment, the sound output devices 201 and 202 may include speakers. According to an embodiment, the input device 203 may include a receiver for calls disposed in the first housing 210, and a speaker. In certain embodiments, the input device 203, the sound output devices 201 and 202, and the connector port 207 may be disposed in a space arranged in the first housing 210 and/or the second housing 220 of the electronic device 200, and may be exposed to the external environment through at least one hole formed in the first housing 210 and/or the second housing 220. In certain embodiments, the sound output devices 201 and 202 may include a speaker (e.g., piezo speaker) that operates without using a hole formed in the first housing 210 and/or the second housing 220.

The sensor modules 204 and 219 may generate electrical signals or data corresponding to an internal operating state of the electronic device 200 or to an external environmental condition. The sensor modules 204 and 219 may include a first sensor module 204 (e.g., a proximity sensor) and/or a second sensor module (e.g., a fingerprint sensor) disposed on the first surface 210A of the housing 210, and/or a third sensor module 219 (e.g., a heart rate monitor (HRM) sensor) and/or a fourth sensor module (e.g., a fingerprint sensor) disposed on the second surface 210B of the housing 210. The fingerprint sensor may be disposed on the second surface 210B as well as the first surface 210A (e.g., the display 201) of the housing 210. The electronic device 200 may further include at least one of a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor 204.

The camera modules 205, 212 and 213 may include a first camera device 205 disposed on the first surface 210A of the electronic device 200, and a second camera device 212 and/or a flash 213 disposed on the second surface 210B. The camera module 205 or the camera module 212 may include one or more lenses, an image sensor, and/or an image signal processor. The flash 213 may include, for example, a light emitting diode or a xenon lamp. Two or more lenses (infrared cameras, wide angle and telephoto lenses) and image sensors may be disposed on one side of the electronic device 200.

The key input device 217 may be disposed on the lateral surface 210C of the housing 210. The electronic device 200 may not include some or all of the key input device 217 described above, and the key input device 217 which is not included may be implemented in another form such as a soft key on the display 201. The key input device 217 may include the sensor module disposed on the second surface 210B of the housing 210.

The Indicator may be disposed on the first surface 210A of the housing 210. For example, the indicator may provide status information of the electronic device 200 in an optical form. The indicator may provide a light source associated with the operation of the camera module 205. The indicator may include, for example, a light emitting diode (LED), an IR LED, or a xenon lamp.

The connector hole 208 may include a first connector hole 208 adapted for a connector (e.g., a USB connector) for transmitting and receiving power and/or data to and from an external electronic device, and/or a second connector hole adapted for a connector (e.g., an earphone jack) for transmitting and receiving an audio signal to and from an external electronic device.

Some camera modules 205 of camera modules 205 and 212, some sensor modules 204 of sensor modules 204 and 219, or an indicator may be arranged to be exposed through a display 201. For example, the camera module 205, the sensor module 204, or the indicator may be arranged in the internal space of an electronic device 200 so as to be brought into contact with an external environment through an opening of the display 201, which is perforated up to a front plate 202. According to an embodiment, an area corresponding to some camera module 105 of the display201 is a part of an area in which content is displayed, and may be formed as a transmission area having designated transmittance. For example, the transmission area may be formed to have transmittance having a range of about 5% to about 20%. The transmission area may include an area overlapped with a valid area (e.g., a field of view (FOV)) of the camera module 105 through which light imaged by an image sensor and for generating an image passes. For example, a transmission area of the display201 may include an area in which the density of pixels and/or a wiring density are lower than that of surroundings. The camera module 205 may include, for example, under display camera (UDC). In an embodiment, some sensor modules 204 may be arranged to perform their functions without being visually exposed through the front plate 202 in the internal space of the electronic device. For example, in this case, an area of the display201 facing the sensor module may not require a perforated opening.

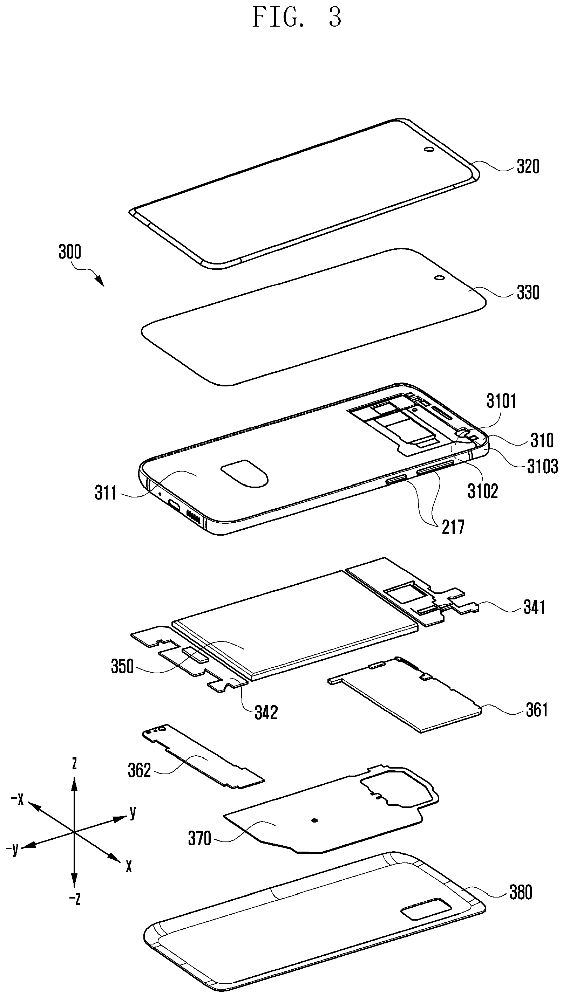

FIG. 3 is an exploded perspective view of the electronic device according to various embodiments.

The electronic device 300 of FIG. 3 may be at least partially similar to the electronic device 101 of FIGS. 1 and/or the electronic device 200 of FIG. 2A, or may include other embodiments of an electronic device.

Referring to FIG. 3, the electronic device 300 (e.g., the electronic device 101 in FIG. 1 or the electronic device 200 in FIG. 2A) may include a lateral member 310 (e.g., the side surface bezel structure 218 in FIG. 2A), a support member 311 (e.g., a bracket or a support structure), a front surface cover 320 (e.g., the front plate 202 or the first plate in FIG. 2A), a display 330 (e.g., the display 201 in FIG. 2A), one or more substrates 341 and 342 (e.g., a printed circuit board (PCB), a flexible PCB (FPCB), or a rigid-flexible PCB (R-FPCB)), a battery 350, one or more additional support members 361 and 362 (e.g., a rear case or a rear bracket), an antenna 370, and/or a rear surface cover 380 (e.g., the rear surface plate 211 or the second plate in FIG. 2). In various embodiments, in the electronic device 300, at least one of the components (e.g., the support member 311 or one or more additional support members 361 and 362) may be omitted, or other components may be additionally included. At least one of the components of the electronic device 300 may be the same as or similar to at least one of the components of the electronic device 100 in FIG. 1 or the electronic device 200 in FIG. 2A, and a redundant description may be omitted below.

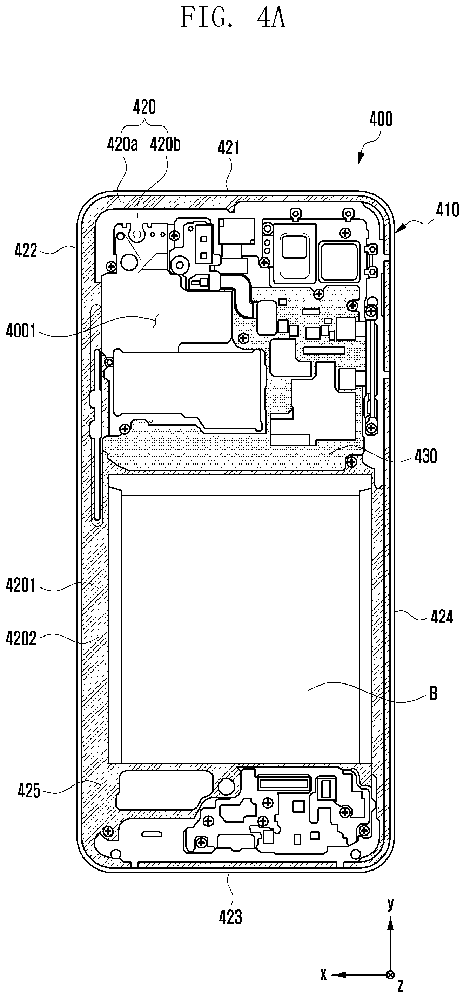

According to various embodiments, the lateral member 310 may include a first surface 3101 oriented in a first direction (e.g., the z-axis direction), a second surface 3102 facing away from the first surface 3101, and a side surface 3103 surrounding the space between the first surface 3101 and the second surface 3102. According to an embodiment, at least a portion of the side surface 3103 may define the exterior of the electronic device. According to an embodiment, the support member 311 may be disposed to extend from the lateral member 310 toward the inner space (e.g., the inner space 4001 in FIG. 4A) of the electronic device 300. In various embodiments, the support member 311 may be disposed separately from the lateral member 310. According to an embodiment, the lateral member 310 and/or the support member 311 may be made of, for example, a metal material and/or a non-metal material (e.g., polymer). According to an embodiment, the support member 311 may support at least a portion of the display 330 via the first surface 3101, and may be disposed to support at least a portion of the one or more substrates 341 and 342 and/or a battery 350 via the second surface 3102. According to an embodiment, the one or more substrates 341 and 342 may include a first substrate 341 (e.g., a main substrate) disposed at one side in the inner space (e.g., the inner space 4001 in FIG. 4A) of the electronic device 300 with respect to the battery 350, and a second substrate 342 (e.g., a sub-circuit board) disposed on at the other side. According to an embodiment, the first substrate 341 and/or the second substrate 342 may include a processor, memory, and/or an interface. According to an embodiment, the processor may include one or more of, for example, a central processing device, an application processor, a graphics processor, an image signal processor, a sensor hub processor, or a communication processor. According to an embodiment, the memory may include, for example, volatile memory or nonvolatile memory. According to an embodiment, the interface may include, for example, a high-definition multimedia interface (HDMI), a universal serial bus (USB) interface, an SD card interface, and/or an audio interface. The interface may electrically or physically connect, for example, the electronic device 300 to an external electronic device and may include a USB connector, an SD card/MMC connector, or an audio connector. According to an embodiment, the battery 350 is a device configured to supply power to at least one component of the electronic device 300 and may include, for example, a non-rechargeable primary battery, a rechargeable secondary battery, or a fuel cell. At least a portion of the battery 350 may be disposed on substantially the same plane as, for example, the one or more circuit boards 341 and 342. According to an embodiment, the battery 350 may be disposed in a manner of being embedded in the electronic device 300. In various embodiments, the battery 350 may be disposed to be detachable from the electronic device 300.

According to various embodiments, the antenna 370 may be disposed between the rear surface cover 380 and the battery 350. According to an embodiment, the antenna 370 may include, for example, a near-field communication (NFC) antenna, a wireless charging antenna, and/or a magnetic secure transmission (MST) antenna. For example, the antenna 370 may execute short-range communication with an external device or may transmit/receive power required for charging to/from an external device in a wireless manner. In various embodiments, an antenna may be configured by a portion of the lateral member 310 and/or the support member 311, or a combination thereof. In various embodiments, the electronic device 300 may further include a digitizer configured to detect an external electronic pen.

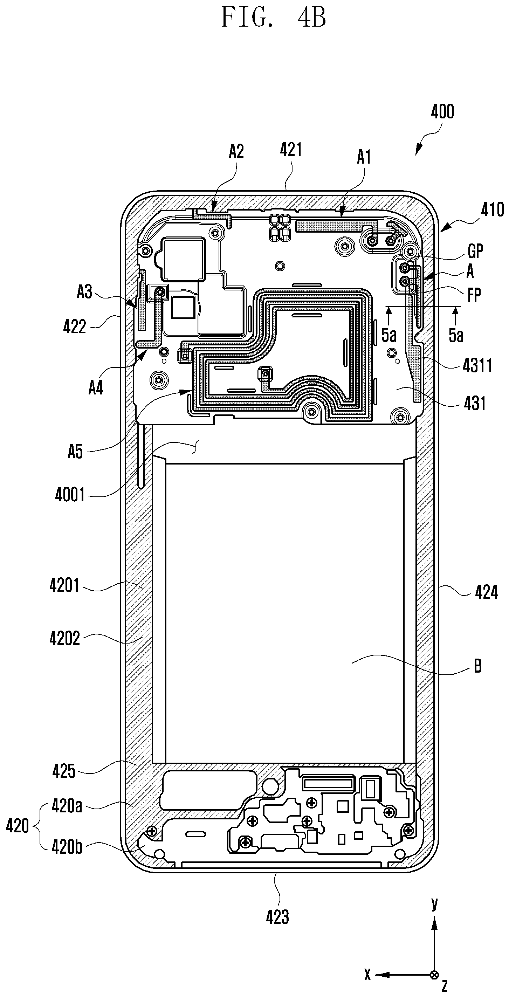

FIG. 4A is a configuration view of an electronic device viewed from the rear according to various embodiments of the disclosure. FIG. 4B is a view illustrating the state of an antenna carrier disposed in the electronic device of FIG. 4A according to various embodiments of the disclosure.

The electronic device 400 of FIG. 4A may include an embodiment that is at least partially similar to the electronic device 101 in FIG. 1, the electronic device 200 in FIG. 2A, and/or the electronic device 300 of FIG. 3, or may include other embodiments of the electronic devices.

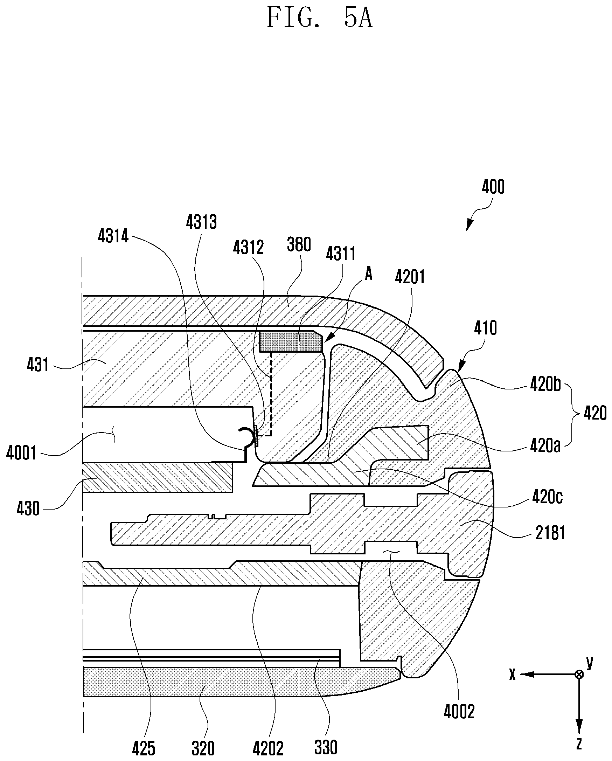

In FIGS. 4A and 4B, the electronic device 400 is illustrated in the state in which the rear surface cover (e.g., the rear surface cover 380 in FIG. 5A) is omitted for convenience of description.

Referring to FIGS. 4A and 4B, the electronic device 400 (e.g., the electronic device 101 in FIG. 1, the electronic device 200 in FIG. 2A, and/or the electronic device 300 in FIG. 3) may include a housing 410 (e.g., the housing 210 in FIG. 2A) (a housing structure) including a front surface cover (e.g., the front surface plate 202 in FIG. 2A or the front surface cover 320 in FIG. 5A) (e.g., a first cover or a first plate), a rear surface cover (e.g., the rear surface plate 211 in FIG. 2A or the rear surface cover 380 in FIG. 5A) (e.g., a second cover or a second plate) facing away from the front surface cover, and a lateral member 420 (e.g., the side surface bezel structure 218 in FIG. 2A or the lateral member 310 in FIG. 3) surrounding the inner space 4001 between the front surface cover and the rear surface cover. According to an embodiment, the lateral member 420 may at least partially include a conductive member 420a (e.g., a metal material) and a non-conductive member 420b (e.g., a polymer material or an injection-molded product) coupled to the conductive member 420a. According to an embodiment, the lateral member 420 may be fabricated in the manner of injection-molding the non-conductive member 420b on the conductive member 420a. In some embodiments, the conductive member 420a may be structurally coupled to the non-conductive member 420b. According to an embodiment, the non-conductive member 420b may be disposed along the edge of the lateral member 420 to be at least partially visible from the outside. According to an embodiment, the conductive member 420a may be disposed inside the non-conductive member 420b to be invisible from the outside. In some embodiments, at least a portion of the conductive member 420a may be disposed to be exposed to the inner space of the electronic device. In some embodiments, at least a portion of the conductive member 420a may be disposed to be exposed and to be visible from the outside.

According to various embodiments, the lateral member 420 may include a first side surface 421 having a first length, a second side surface 422 extending in a vertical direction from the first side surface 421 and having a second length longer than the first length, a third side surface 423 extending in a direction parallel to the first surface 421 from the second side surface 422 and having the first length, and a fourth side surface 424 extending from the third side surface 423 in a direction parallel to the second side surface 422 and having the second length. According to an embodiment, the lateral member 420 may include a support member 425 extending from a portion of at least one (e.g., the second side surface 422) of the above-mentioned side surfaces 421, 422, 423, and 424 to the inner space 4001. According to an embodiment, at least a portion of the support member 425 may be configured as the conductive member 420a. According to an embodiment, at least a portion of the support member 425 may be configured as the non-conductive member 420b. According to an embodiment, the support member 425 may extend from the lateral member 420 or may be disposed in the form of being structurally coupled to the lateral member 420. According to an embodiment, the support member 425 may include a first surface 4201 oriented in a first direction (e.g., the z-axis direction) and a second surface 4202 oriented in a second direction (e.g., the -z-axis direction) opposite to the first surface 4201. According to an embodiment, the electronic device 400 may include a display (e.g., the display 330 in FIG. 5A) disposed to be supported by at least a portion of the first surface 4201 and disposed to be visible from the outside through the front surface cover (e.g., the front surface cover 320 in FIG. 5A). According to an embodiment, the electronic device 400 may include a battery B (e.g., the battery 350 in FIG. 3) and/or a device substrate 430 (e.g., the first substrate 341 in FIG. 3) disposed to be supported by at least a portion of the second surface 4202. According to an embodiment, the device substrate 430 may include a printed circuit board (PCB) or a flexible printed circuit board (FPCB).

According to various embodiments, the electronic device 400 may include an antenna carrier 431 disposed between the device substrate 430 and the rear surface cover (e.g., the rear surface cover 380 in FIG. 5A) in the inner space 4001. According to an embodiment, the antenna carrier 431 is a dielectric structure and may be replaced with an additional support member 361 (e.g., a rear case) of FIG. 3. According to an embodiment, the electronic device 400 may include at least one antenna structure 4311 disposed on the antenna carrier 431. According to an embodiment, the antenna structure 4311 may include a laser direct structuring (LDS) pattern (e.g., a conductive pattern) provided on the antenna carrier 431. In some embodiments, the antenna structure 4311 may include a thin metal plate attached to the antenna carrier 431 or a flexible printed circuit board (FPCB). In some embodiments, the antenna structure 4311 may be at least partially built into the antenna carrier 431 configured as an injection-molded product through injection molding.

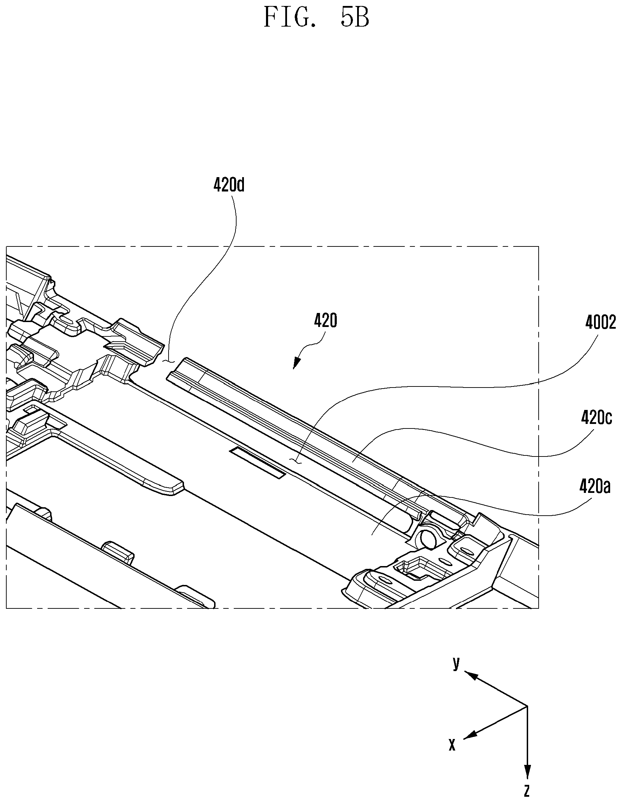

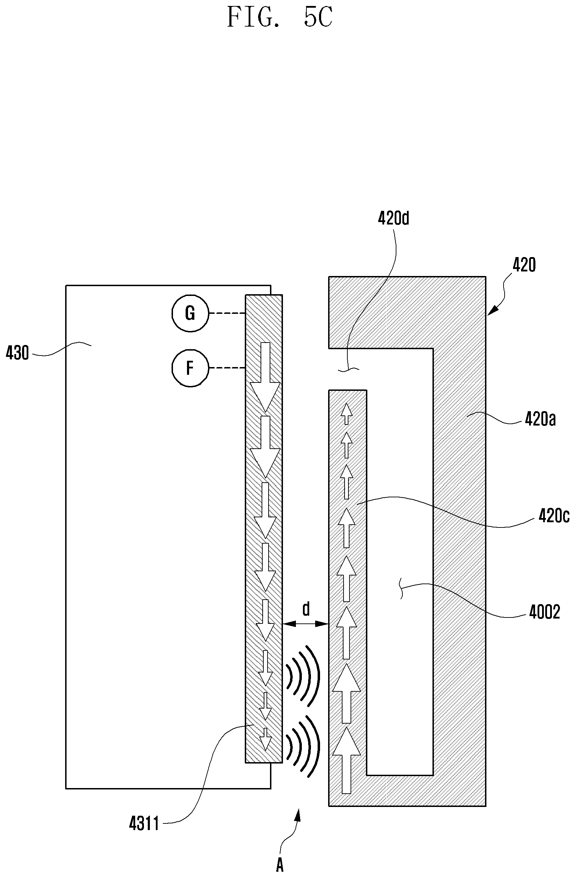

According to various embodiments, the electronic device 400 may operate with an antenna A via the antenna structure 4311 disposed on the antenna carrier 431 and a conductive portion (e.g., the conductive portion 420c in FIG. 5B) capacitively coupled to the antenna structure 4311. According to an embodiment, the conductive portion 420c may be disposed to be split from the conductive member 420a through at least one split portion (e.g., the split portion 420d in FIG. 5B). According to an embodiment, the at least one split portion 420d may be filled with a non-conductive member 420b. According to an embodiment, the conductive portion 420c may be used as a dummy pattern (e.g., a parasitic pattern) for the antenna A by being electrically connected to the antenna structure 4311. According to an embodiment, the antenna carrier 431 may be disposed to at least partially overlap the device substrate 430 when the rear surface cover 380 is viewed from above. According to an embodiment, the antenna structure 4311 may be electrically connected to a power feeder (e.g., the power feeder F in FIG. 5C) of a wireless communication circuit (e.g., the wireless communication module 192 in FIG. 1) disposed on the device substrate 430 by simply placing the antenna carrier 431 to overlap the device substrate 430. For example, a feed point FP exposed to the antenna carrier 431 and electrically connected to the antenna structure 4311 may be electrically connected to the power feeder F of the device substrate 430. In substantially the same way, a ground point GP exposed to the antenna carrier 431 and electrically connected to the antenna structure 4311 may be electrically connected to the ground G of the device substrate 430. In some embodiments, the feed point FP of the antenna structure 4311 may be electrically connected to the power feeder F via an electrical connection member (e.g., an FPCB, an RF cable, or a conductive contact such as a C-clip). According to an embodiment, the wireless communication circuit (e.g., the wireless communication module 192 in FIG. 1) may be configured to transmit or receive a wireless signal in at least one predetermined frequency band (e.g., an about 3 GHz to 10 GHz band) (e.g., a legacy band, NR band, and/or UWB band) via the antenna structure 4311. In some embodiments, the antenna structure 4311 may be disposed or fabricated directly on the device substrate 430. In this case, the antenna carrier 431 may be omitted.

According to various embodiments, the electronic device 400 may further include additional antennas A1, A2, A3, A4, and A5 disposed on the antenna carrier 431 and configured to be electrically connected to the wireless communication circuit (e.g., the wireless communication module 192 of FIG. 1) on the device substrate 430. According to an embodiment, the additional antennas A1, A2, A3, A4, and A5 may be arranged on the antenna structure 431 in substantially the same manner as the antenna structure 431 to have different shapes, and may operate in different frequency bands.

According to an exemplary embodiment of the disclosure, degradation in radiation performance by the conductive portion 420c may be reduced by disposing the conductive portion 420c close to the antenna structure 4311 disposed on the antenna carrier 431 to enable coupling with the antenna structure 411, and using the conductive portion 420c as a dummy pattern (e.g., a parasitic pattern) for the antenna A.

FIG. 5A is a cross-sectional view of a portion of the electronic device according to various embodiments of the disclosure taken along line 5a-5a in FIG. 4B. FIG. 5B is a perspective view of a portion of a conductive member according to various embodiments of the disclosure. FIG. 5C is a view schematically illustrating the arrangement structure of an antenna structure and a conductive member according to various embodiments of the disclosure.

Referring to FIGS. 5A and 5B, the electronic device 400 may include a housing 410 including a front surface cover 320 oriented in a first direction (e.g., the z-axis direction), a rear surface cover 380 oriented in a second direction (e.g., the -z-axis direction) opposite to the front surface cover 320, and a lateral member 420 disposed to surround the inner space 4001 between the front surface cover 320 and the rear surface cover 380. According to an embodiment, the lateral member 420 may include a conductive member 420a and a non-conductive member 420b coupled (e.g., coupled through injection molding) with the conductive member 420a. According to an embodiment, the lateral member 420 may be fabricated in the manner of injection-molding the non-conductive member 420b on the conductive member 420a. According to an embodiment, the non-conductive member 420b may be disposed along the edge of the lateral member 420 to be at least partially visible from the outside. According to an embodiment, the conductive member 420a may be disposed inside the non-conductive member 420b to be invisible from the outside.

According to various embodiments, the electronic device 400 may include an antenna carrier 431 disposed between the device substrate 430 and the rear surface cover 380. According to an embodiment, when the antenna carrier 431 is mounted, the antenna structure 4311 may be disposed near the conductive portion 420c of the lateral member 420 to have a separation distance (e.g., the separation distance d in FIG. 5C) that enables coupling with at least a portion of the conductive portion 420c. For example, the conductive portion 420c may be split from the conductive member 420a by a split portion 420d. According to an embodiment, the antenna structure 4311 may be electrically connected to a conductive pad 4313 exposed from the antenna carrier 431 through an electrical path 4312. Accordingly, the antenna carrier 431 may be disposed on the device substrate 430 simply by being placed in the electronic device 400, and when a conductive contact 4314 electrically connected to the wireless communication circuit (e.g., the wireless communication module 192 in FIG. 1) is brought into physical contact with the conductive pad 4313, the antenna structure 4311 may be electrically connected to the wireless communication circuit (e.g., the wireless communication module 192 in FIG. 1). In some embodiments, the antenna structure 4311 may be in direct contact with the device substrate 430 and/or the conductive contact 4314. In some embodiments, the antenna structure 4311 may be electrically connected to the device substrate 430 via another electrical connection member (e.g., an RF cable).

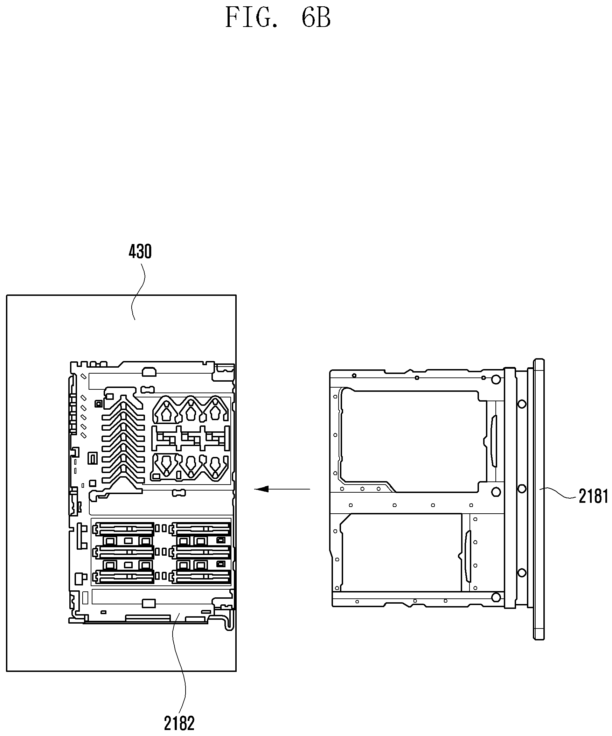

According to various embodiments, the electronic device 400 may include an opening 4002 provided through the lateral member 420 and allowing an electronic component, such as a socket device (e.g., the socket device 2182 in FIG. 6B) disposed in the inner space 4001, to be connected to the outside therethrough. In this case, at least a portion of the opening 4002 may be provided through at least a portion of the conductive portion 420c extending from the conductive member 420a. Accordingly, the electronic device 400 may include a tray member 2181 to be mounted on the socket device 2182 through the opening 4002. According to an embodiment, the tray member 2181 may electrically connect at least one card-type external device for operating the electronic device 400 to the socket device 2182. This card-type external device may include at least one of a memory card, a subscriber identification module (SIM) card, or a user information module (UIM) card.

Referring to FIG. 5C, the electronic device 400 may include an antenna structure 4311 electrically connected to the power feeder F and the ground G on the device substrate 430, and the antenna carrier 431 is omitted. According to an embodiment, the antenna structure 4311 may be arranged in the same longitudinal direction as and in parallel with the conductive portion 420c to have a separation distance d enabling coupling with the conductive portion. In some embodiments, the conductive portion 420c may have a length that is equal to that of the antenna structure 4311, or may have a length that is longer or shorter than that of the antenna structure 4311. In some embodiments, the antenna structure 4311 may be disposed to be coupled with the conductive portion 420c, but the antenna structure and the conductive portion may be disposed not to be parallel to each other. According to an embodiment, the lateral member 420 may include an opening 4002 provided through the conductive member 420 to accommodate the tray member 2181. According to an embodiment, the lateral member 420 may include a conductive portion 420c configured with a portion of the conductive member 420a providing the opening 4002 and the split portion 420d. According to an embodiment, the split portion 420d may be disposed at a position corresponding to one end of close to the power feeder F of the antenna structure 4311 (upper split). According to an embodiment, the split portion 420d may be filled with a non-conductive member 420b.

The antenna A according to an exemplary embodiment of the disclosure operates via the antenna structure 4311 and the conductive portion 420c disposed near the antenna structure 431 to enable coupling with the antenna structure, which may help reduce degradation in radiation performance due to the surrounding conductive material.

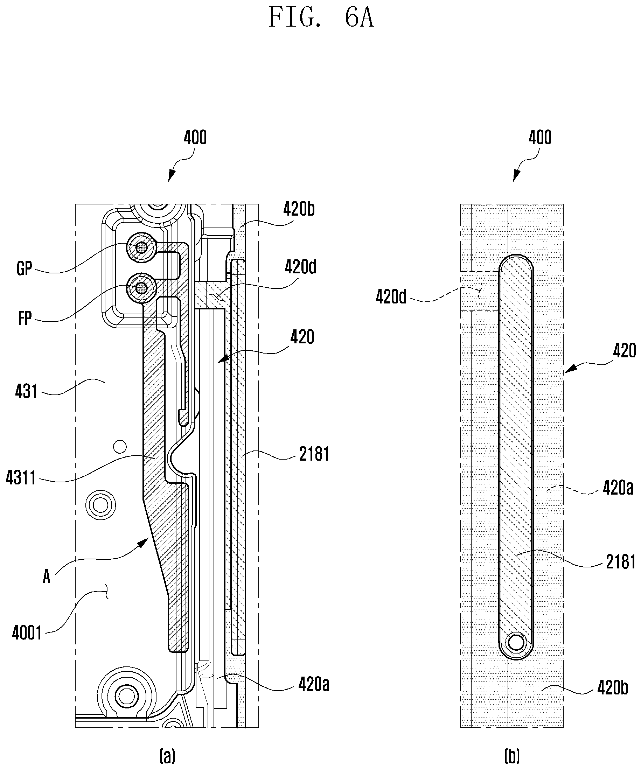

FIG. 6A is a configuration view of a portion of a lateral member in which a conductive member and a non-conductive member are coupled to each other near an antenna structure according to various embodiments of the disclosure. FIG. 6B is a view illustrating an arrangement structure of a socket and a tray member according to various embodiments of the disclosure.

(a) in FIG. 6A is a plan view of a portion of an electronic device, and (b) in FIG. 6A is a view of a portion of the electronic device.

Referring to FIGS. 6A and 6B, the electronic device 400 may include, in an inner space 4001, an antenna A including an antenna structure 4311 disposed on an antenna carrier 431 and a conductive member 420c disposed to at least partially enable coupling with the antenna structure 4311 and used as a portion of a lateral member 420. According to an embodiment, the antenna A may use, as a dummy pattern, the conductive portion 420c split from the conductive portion 420a by a split portion 420d, in which the conductive portion 420a forms at least a portion of the lateral member 420. According to an embodiment, the antenna A may be operated in at least one predetermined frequency band via the antenna structure 4311 and the conductive portion 420c.

According to various embodiments, the electronic device 400 may include an opening 4002 provided through the conductive member 420a of the lateral member 420. According to an embodiment, the electronic device 400 may include a socket device 2182 disposed at a position corresponding to the opening 4002 in the inner space 4001. According to an embodiment, the socket device 2182 may be disposed on a device substrate 430. According to an embodiment, a tray member 2181 may be detachably mounted on the socket device 2182 through the opening 4001, and a card-type external device supported through the tray member 2181 may be electrically connected to the device substrate 430 via the socket device 2182.

According to various embodiments, the conductive member 420a may be disposed to be invisible from the outside by the non-conductive member 420b that is coupled the conductive member 420a through injection molding. Accordingly, the split portion 420d may also be invisible from the outside by being filled with the non-conductive portion 420b, and the electronic device 400 helps create an attractive appearance by making the split portion 420d invisible to the naked eye. In some embodiments, at least a portion of the conductive member 420a may be coupled to the non-conductive member 420b to be visible from the outside in at least a portion of the side surface (e.g., the side surface 210c in FIG. 2A) of the electronic device 400.

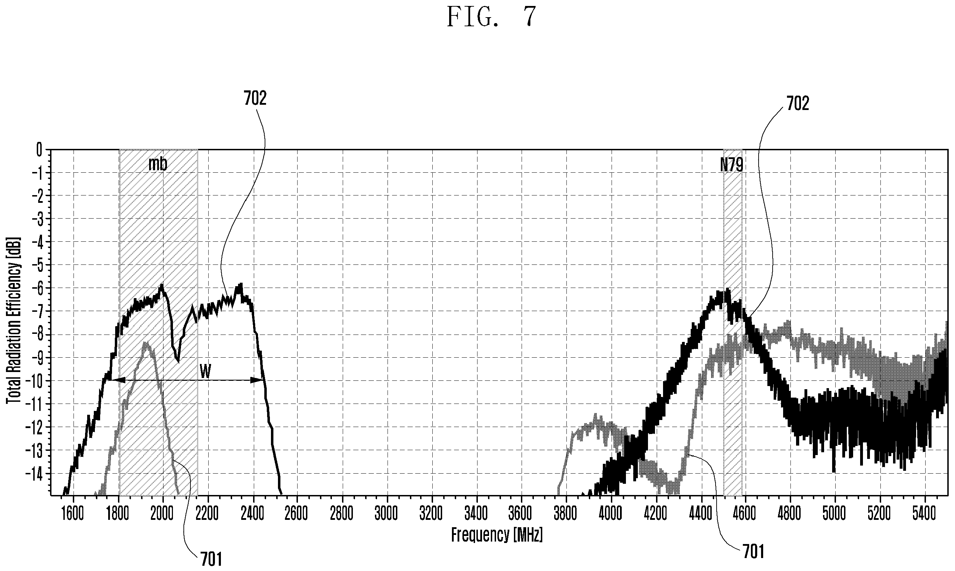

FIG. 7 is a graph comparing the radiation performances of an antenna before and after disposing a conductive portion for coupling according to various embodiments of the disclosure.

FIG. 7 is a graph showing the radiation efficiency of an antenna A depending on the presence or absence of the conductive portion 420c in the electronic device of FIGS. 5A to 5C, wherein it can be seen that in a first frequency band (e.g., a mid-frequency band) and a second frequency band (e.g., an n79 frequency band), the antenna A has better radiation performance in the case where the antenna structure 4311 operates while the conductive portion 420c disposed to enable coupling with the antenna structure is included (Graph 702) compared to the case where the antenna structure 4311 operates alone (Graph 701). In addition, it can be seen that when the efficiency (e.g., about -10 dB) of the antenna A is the same, in the first frequency band, the antenna A has a more expanded bandwidth W in the case where the antenna structure 4311 operates while the conductive portion 420c disposed to enable coupling with the antenna structure is included (Graph 702) compared to the case where the antenna structure 4311 operates alone (Graph 701).

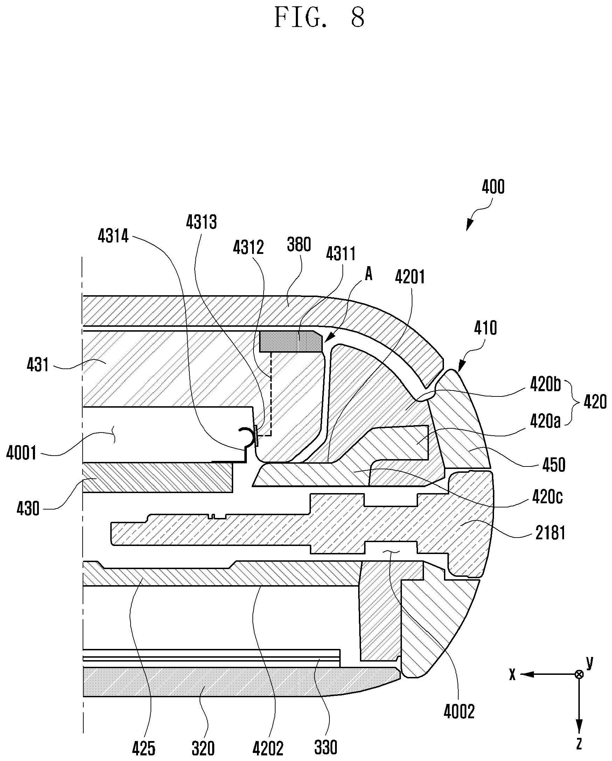

FIG. 8 is a cross-sectional view of a portion of an electronic device according to various embodiments of the disclosure.

In describing the electronic device 400 of FIG. 8, components that are substantially the same as those of the electronic device 400 of FIG. 5A are given the same reference numerals, and detailed descriptions thereof may be omitted.

Referring to FIG. 8, the electronic device 400 may further include a frame member 450 disposed along the rim of the lateral member 420. According to an embodiment, the lateral member 420 may be disposed to be invisible from the outside through the frame member 420. Accordingly, a conductive member 420a and a conductive portion 420c may also be disposed to be invisible from the outside through the frame member 450. In some embodiments, the lateral members 420 may be disposed to be visible from the outside through at least a portion of frame member 450. In some embodiments, at least a portion of the conductive member 420a and/or the conductive portion 420c may be disposed between the non-conductive member 420b and the frame member 450. In this case, at least a portion of the conductive member 420a and/or the conductive portion 420c may be coupled to the non-conductive member 420b and/or the frame member 450 through injection molding or may be structurally coupled to the non-conductive member 420b and/or the frame member 450. In some embodiments, the non-conductive member 420b and the frame member 450 may be made of dielectric materials having different dielectric constants. According to an embodiment, the frame member 450 may be made of a dielectric material having a high dielectric constant. For example, the frame member 450 may be made of a ceramic material.

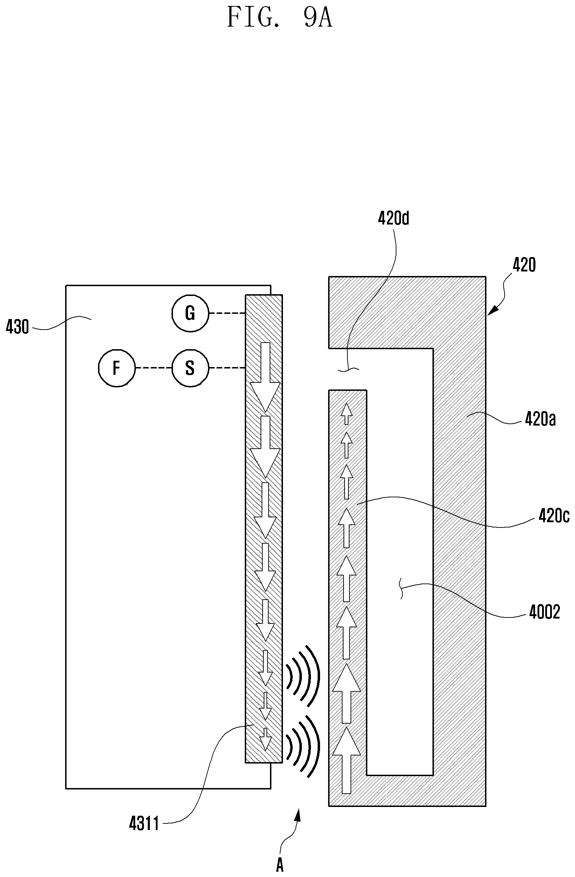

FIG. 9A is a view schematically illustrating the arrangement structure of an antenna structure and a conductive member according to various embodiments of the disclosure.

In describing the antenna A of FIG. 9A, components that are substantially the same as those of the antenna A of FIGS. 5A to 5C are given the same reference numerals, and detailed descriptions thereof may be omitted.

Referring to FIG. 9A, the antenna A may include an antenna structure 4311 disposed in the inner space 4001 of the electronic device, and a conductive portion 420c disposed to enable coupling with the antenna structure 4311, provided as a portion of the conductive member 420a of the lateral member 420, and split from the conductive portion 420a by the split portion 420d. According to an embodiment, the antenna structure 4311 may be electrically connected to each of the power feeder F and the ground G of the device substrate 430. According to an embodiment, the antenna A may be disposed on the device substrate 430 and include a switching circuit S located in an electrical path between the antenna structure 4311 and the power feeder F. According to an embodiment, the switching circuit S may shift the operating frequency band of the antenna A by being switched between matching elements with different values under the control of the processor (e.g., the processor 120 in FIG. 1) of the electronic device 400. According to an embodiment, the matching elements may each include at least one passive element (e.g., a capacitor or an inductor). In some embodiments, the switching circuit S may be replaced with a tunable IC. In some embodiments, the switching circuit S may be disposed in the electrical path between the ground G and the antenna structure 4311.

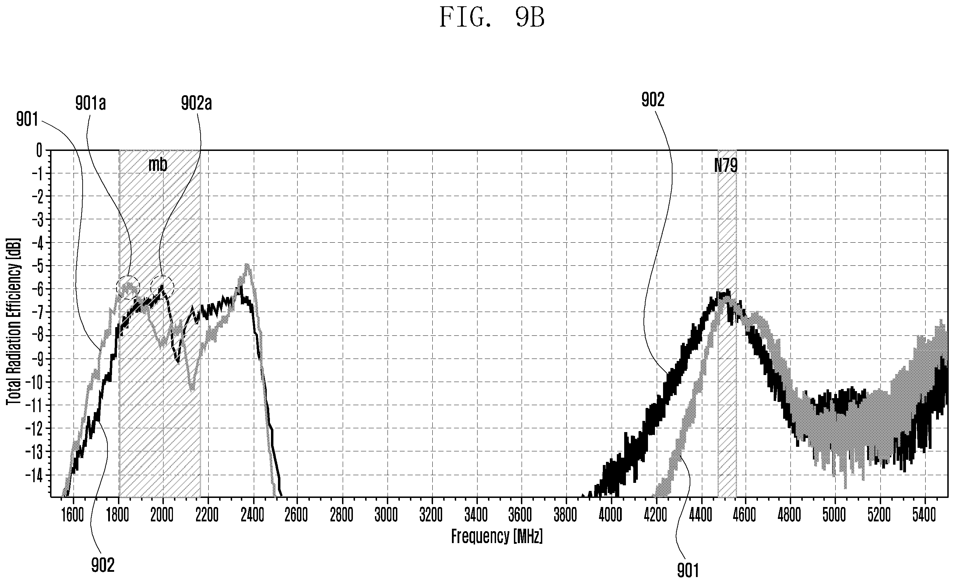

FIG. 9B is a graph showing changes in radiation performance of the antenna of FIG. 9A in response to the operation of the switching circuit according to various embodiments of the disclosure.

Referring to FIG. 9B, the antenna A may operate in State 1 (Graph 901) and in a first frequency band 901a. According to an embodiment, it can be seen that during the transition from State 1 to State 2 through the switching circuit S (Graph 902), the antenna A is shifted to a second frequency band 902a, which is higher than the first frequency band, without reducing efficiency.

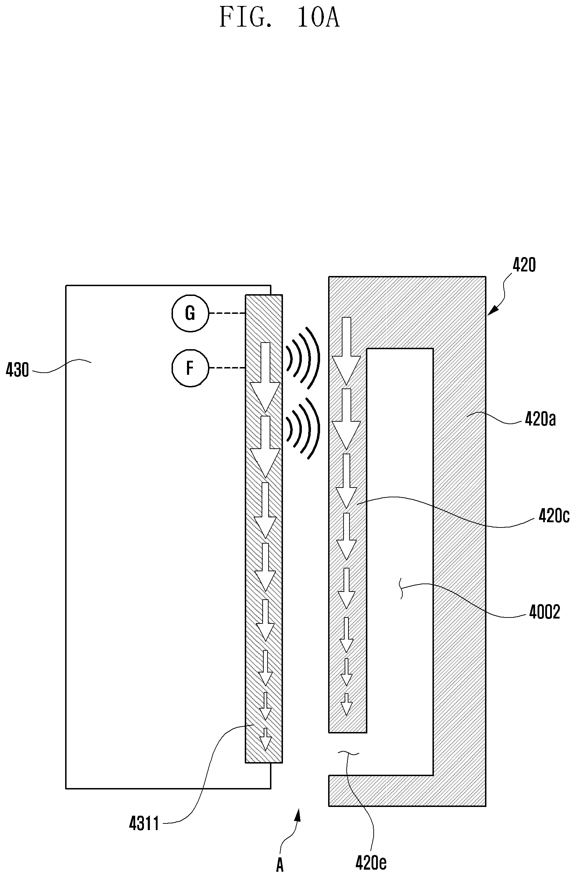

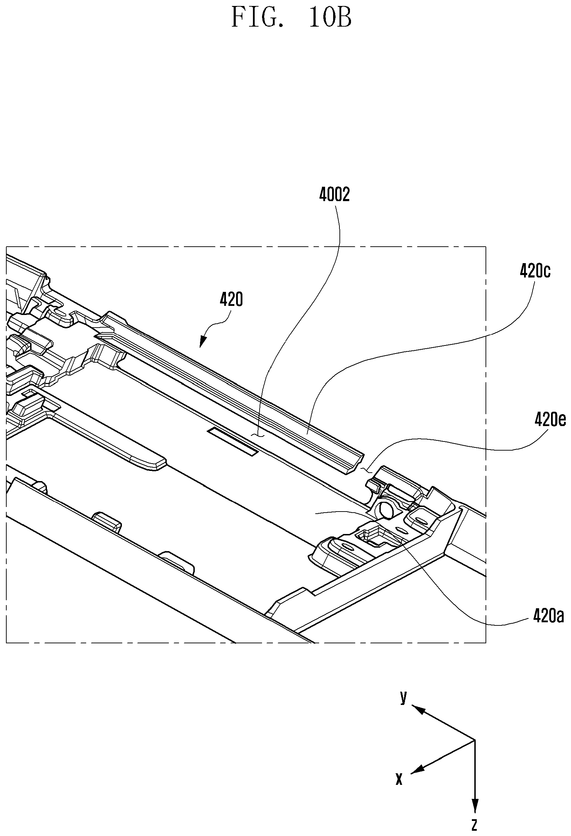

FIG. 10A is a view schematically illustrating the arrangement structure of an antenna structure and a conductive member according to various embodiments of the disclosure. FIG. 10B is a perspective view of a portion of the conductive member of FIG. 10A according to various embodiments of the disclosure.

In describing the antenna A of FIG. 10A and the lateral members 420 of FIG. 10B, components that are substantially the same as those of the antenna A and the lateral member 420 of FIGS. 5A to 5C are given the same reference numerals, and detailed descriptions thereof may be omitted.

Referring to FIGS. 10A and 10B, the antenna A may include an antenna structure 4311 disposed in the inner space 4001 of the electronic device 400, and a conductive portion 420c disposed to enable coupling with the antenna structure 4311, provided as a portion of the conductive member 420a of the lateral member 420, and split from the conductive portion 420a by the split portion 420e. According to an embodiment, the antenna structure 4311 may be electrically connected to each of the power feeder F and the ground G of the device substrate 430. According to an embodiment, the split portion 420e may be disposed at a position corresponding to the other end of the antenna structure 4311 spaced apart from the power feeder F (lower split).

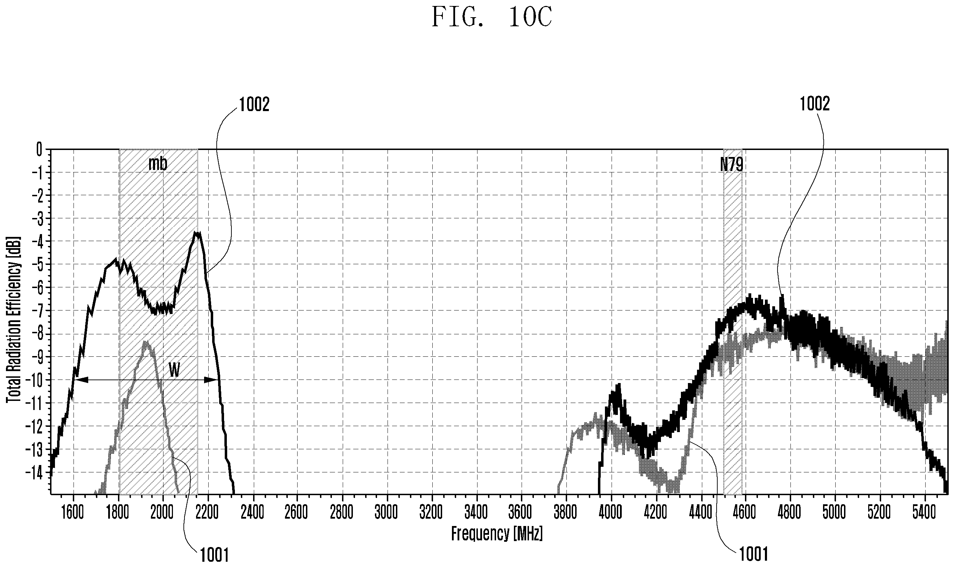

FIG. 10C is a graph comparing the radiation performances of an antenna before and after disposing a conductive portion for coupling according to various embodiments of the disclosure.

FIG. 10C is a graph showing the radiation efficiency of an antenna A depending on the presence or absence of the conductive portion 420c in FIGS. 10A to 10B, wherein it can be seen that in a first frequency band (e.g., an mid-frequency band) and a second frequency band (e.g., an n79 frequency band), the antenna A has better radiation performance in the case where the antenna structure 4311 operates while the conductive portion 420c disposed to enable coupling with the antenna structure is included (Graph 1002) compared to the case where the antenna structure 4311 operates alone (Graph 1001). In addition, it can be seen that when the efficiency (e.g., about -10 dB) of the antenna A is the same, in the first frequency band, the antenna A has a more expanded bandwidth W in the case where the antenna structure 4311 operates while the conductive portion 420c disposed to enable coupling with the antenna structure is included (Graph 1002) compared to the case where the antenna structure 4311 operates alone (Graph 1001).

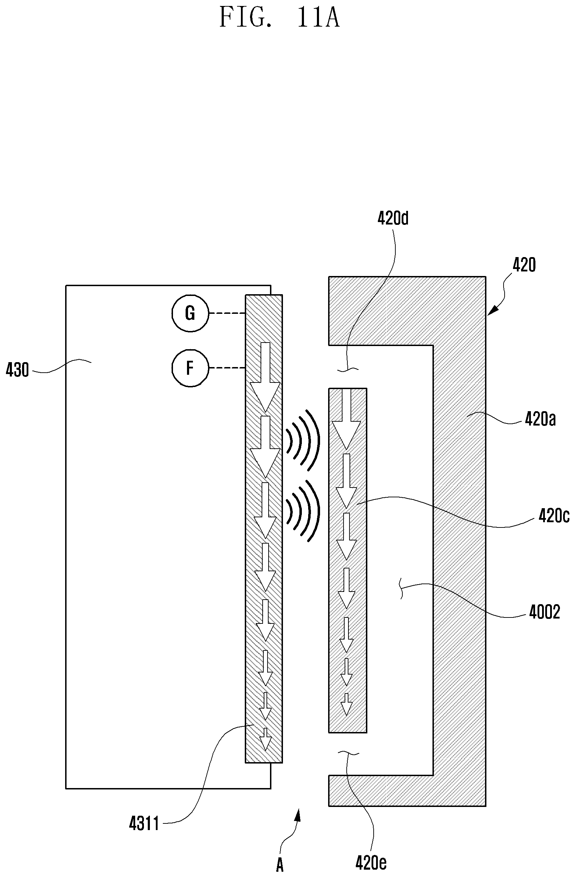

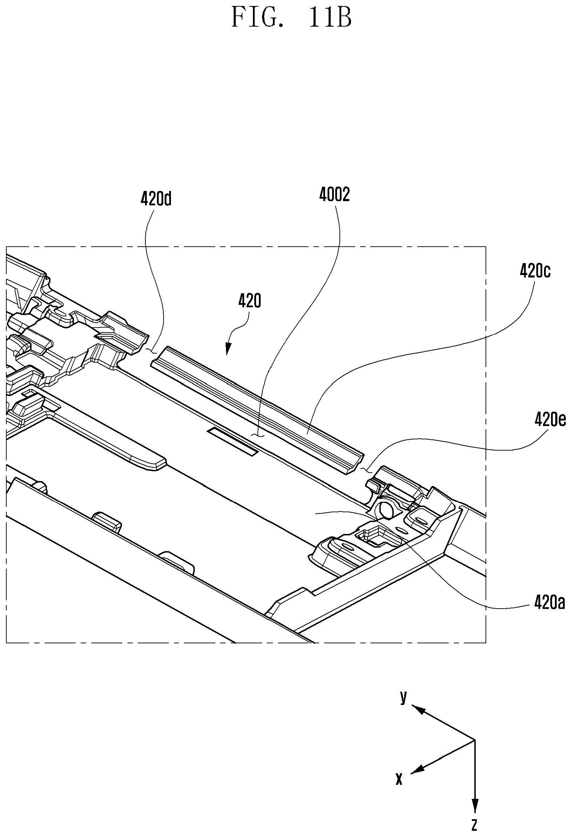

FIG. 11A is a view schematically illustrating the arrangement structure of an antenna structure and a conductive member according to various embodiments of the disclosure. FIG. 11B is a perspective view of a portion of the conductive member of FIG. 11A according to various embodiments of the disclosure.

In describing the antenna A of FIG. 11A and the lateral members 420 of FIG. 11B, components that are substantially the same as those of the antenna A and the lateral member 420 of FIGS. 5A to 5C are given the same reference numerals, and detailed descriptions thereof may be omitted.

Referring to FIGS. 11A and 11B, the antenna A may include an antenna structure 4311 disposed in the inner space 4001 of the electronic device 400, and a conductive portion 420c disposed to enable coupling with the antenna structure 4311, provided as a portion of the conductive member 420a of the lateral member 420, and split from the conductive portion 420a by a pair of split portions 420d and 420e. According to an embodiment, the antenna structure 4311 may be electrically connected to each of the power feeder F and the ground G of the device substrate 430. According to an embodiment, of the pair of split portions 420d and 420e, the first split portion 420d may be disposed at a position corresponding to one end of the antenna structure 4311 near the power feeder F, and the second split portion 420e may be disposed at a position corresponding to the other end of the antenna structure 4311 spaced apart from the power feeder F (upper and lower slit).

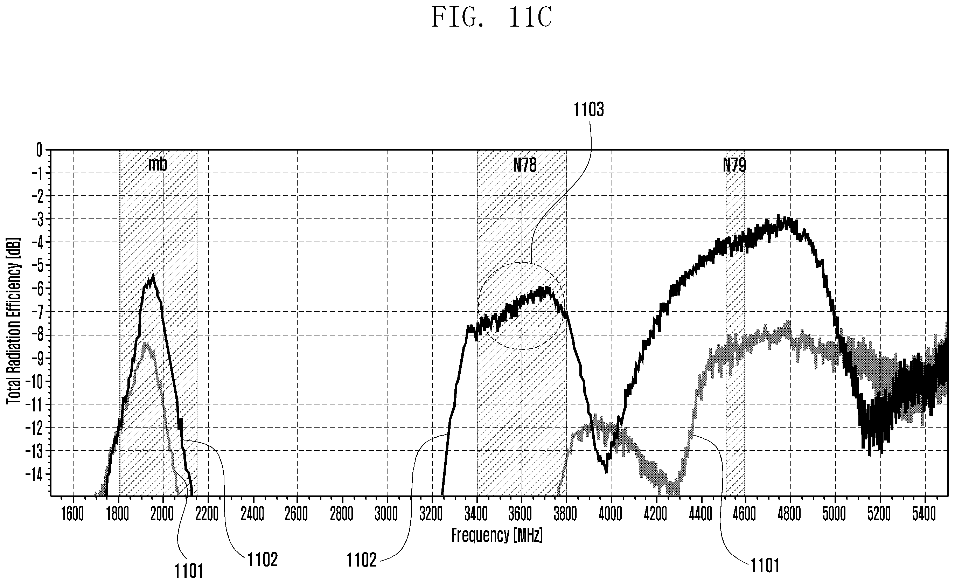

FIG. 11C is a graph comparing the radiation performances of an antenna before and after disposing a conductive portion for coupling according to various embodiments of the disclosure.

FIG. 11C is a graph showing the radiation efficiency of an antenna A depending on the presence or absence of the conductive portion 420c in FIGS. 11A and 11B, wherein it can be seen that in a first frequency band (e.g., an mid-frequency band) and a second frequency band (e.g., an n79 frequency band), the antenna A has better radiation performance in the case where the antenna structure 4311 operates while the conductive portion 420c disposed to enable coupling with the antenna structure is included (Graph 1102) compared to the case where the antenna structure 4311 operates alone (Graph 1101). In addition, it can be seen that, when the conductive portion is included, additional resonance occurs in a third frequency band (e.g., an n78 frequency band) (region 1103).

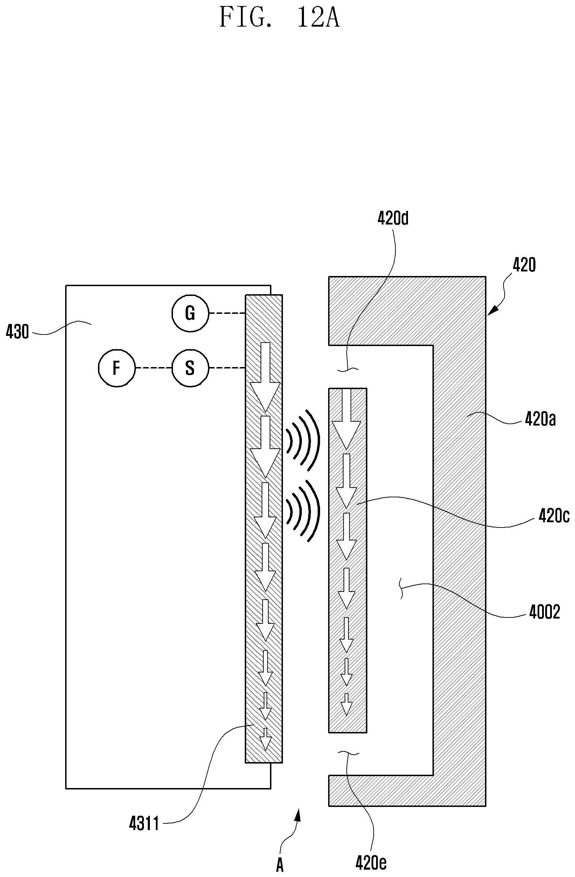

FIG. 12A is a view schematically illustrating the arrangement structure of an antenna structure and a conductive member according to various embodiments of the disclosure.

In describing the antenna A of FIG. 12A, components that are substantially the same as those of the antenna A of FIGS. 11A and 11B are given the same reference numerals, and detailed descriptions thereof may be omitted.

Referring to FIG. 12A, the antenna A may include an antenna structure 4311 disposed in the inner space 4001 of the electronic device 400, and a conductive portion 420c disposed to enable coupling with the antenna structure 4311, provided as a portion of the conductive member 420a of the lateral member 420, and split from the conductive portion 420a by a pair of split portions 420d and 420e. According to an embodiment, the antenna structure 4311 may be electrically connected to each of the power feeder F and the ground G of the device substrate 430. According to an embodiment, the antenna A may be disposed on the device substrate 430 and include a switching circuit S located in an electrical path between the antenna structure 4311 and the power feeder F. According to an embodiment, the switching circuit S may shift the operating frequency band of the antenna A by being switched between matching elements with different values under the control of the processor (e.g., the processor 120 in FIG. 1) of the electronic device 40.

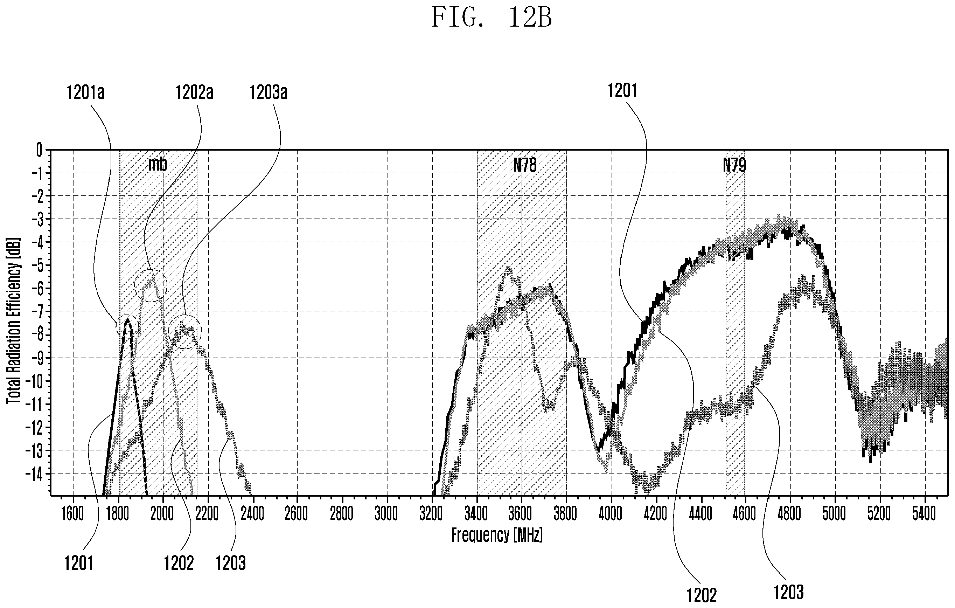

FIG. 12B is a graph showing changes in radiation performance of the antenna of FIG. 12A in response to the operation of the switching circuit according to various embodiments of the disclosure.

Referring to FIG. 12B, the antenna A may operate in State 1 (Graph 1201) and in a first frequency band 1201a. According to an embodiment, it can be seen that during the transition from State 1 to State 2 through the switching circuit S (Graph 1202), the antenna A is shifted to the second frequency band 1202a, which is higher than the first frequency band, generally without reducing efficiency. In addition, it can be seen that during the transition from State 2 to State 3 through the switching circuit S (Graph 1203), the antenna A is shifted to a third frequency band 1203a, which is higher than the second frequency band, generally without reducing efficiency.

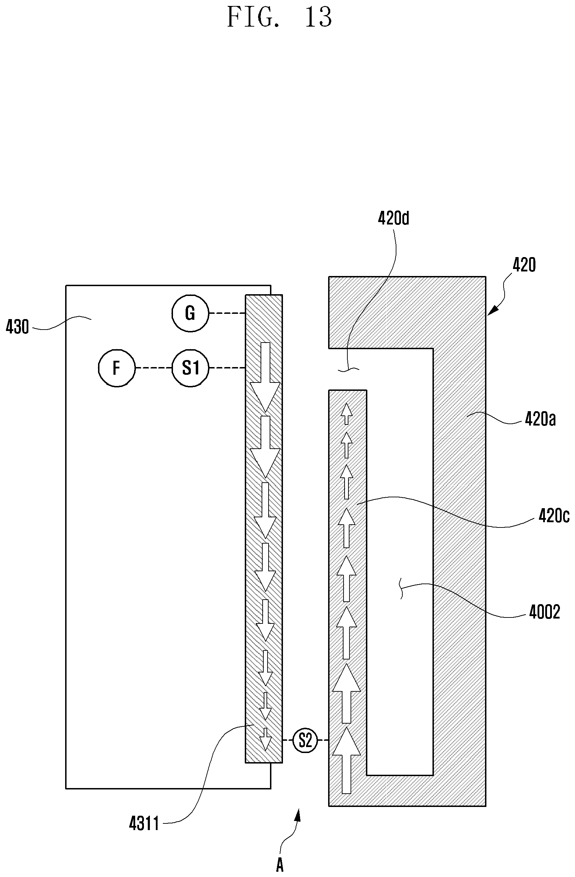

FIG. 13 is a view schematically illustrating the arrangement structure of an antenna structure and a conductive member according to various embodiments of the disclosure.

In describing the antenna A of FIG. 13, components that are substantially the same as those of the antenna A of FIGS. 5A to 5C are given the same reference numerals, and detailed descriptions thereof may be omitted.

Referring to FIG. 13, the antenna A may include an antenna structure 4311 disposed in the inner space 4001 of the electronic device 400, and a conductive portion 420c disposed near the antenna structure 4311, provided as a portion of the conductive member 420a of the lateral member 420, and split from the conductive portion 420a by the split portion 420d. According to an embodiment, the antenna structure 4311 may be electrically connected to each of the power feeder F and the ground G of the device substrate 430. According to an embodiment, the antenna A may be disposed on the device substrate 430 and include a first switching circuit S1 located in an electrical path between the antenna structure 4311 and the power feeder F. According to an embodiment, the antenna A may include a second switching circuit S2 disposed in an electrical path interconnecting the antenna structure 4311 and the conductive portion 420c. According to an embodiment, the second switching circuit S2 may be disposed on the device substrate 430 or may be disposed via a separate substrate (e.g., an FPCB) that electrically interconnects the device substrate 430 and/or the antenna structure 4311 and the conductive portion 420c. According to an embodiment, the first switching circuit S1 and the second switching circuit S2 may shift the operating frequency band of the antenna A by being switched between matching elements with different values under the control of the processor (e.g., the processor 120 in FIG. 1) of the electronic device 400. According to an embodiment, the matching elements may each include at least one passive element (e.g., a capacitor or an inductor). In some embodiments, the first switching circuit S1 may be omitted.

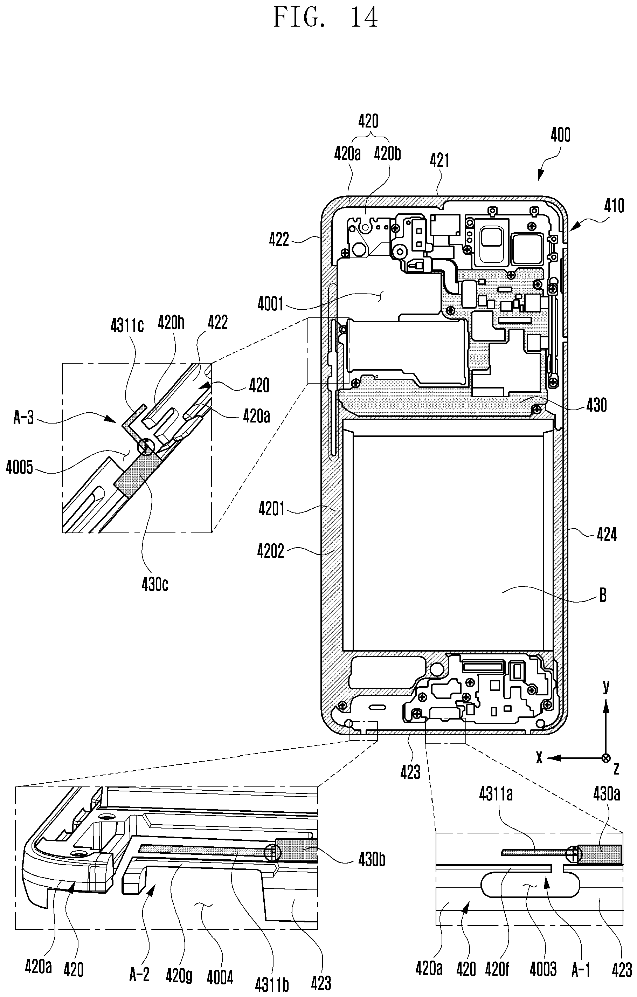

FIG. 14 is a configuration view of an electronic device illustrating an arrangement structure of a conductive portion provided via an opening and a split portion and an antenna according to various embodiments of the disclosure.

Referring to FIG. 14, the electronic device 400 may include one or more openings 4003, 4004, and 4005 provided in the lateral member 420 and one or more antennas A-1, A-2, and A-3 using one or more conductive portions 420f, 420g, and 420h provided by portions of the one or more openings 4003, 4004, and 4005 as portions of antenna structures 4311a, 4311b, and 4311c. According to an embodiment, the one or more antennas A-1, A-2, and A-3 may include a first antennas A-1 and a second antennas A-2 arranged around the openings 4003 and 4004 provided in at least a portion of a third side surface 423 of the lateral member 420, and a third antenna A-3 arranged around the opening 4005 provided in at least a portion of a second side surface 422.

According to various embodiments, the first antenna A-1 may include a first antenna structure 4311a electrically connected to a power feeder F on a first substrate 430a disposed in the inner space 4001 of the electronic device 400, and a first conductive portion 420f disposed at a position that enables coupling with a first antenna structure 4311a via a first split portion C1 around a first opening 4003 provided through the conductive member 420. In this case, the first opening 4003 may be used as a connector port hole to accommodate an external connector (e.g., the connector 208 in FIG. 2A).

According to various embodiments, the second antenna A-2 may include a second antenna structure 4311b electrically connected to a power feeder F on a second substrate 430b disposed in the inner space 4001 of the electronic device 400, and a second conductive portion 420g disposed at a position that enables coupling with the second antenna structure 4311b via a second split portion C2 around a second opening 4004 provided through the conductive member 420. In this case, the second opening 4004 may be used as a hole for a speaker (e.g., the speaker 207 in FIG. 2A) or a hole for a microphone (e.g., the microphone 203 in FIG. 2A).

According to various embodiments, the third antenna A-3 may include a third antenna structure 4311c electrically connected to a power feeder F on a third substrate 430c disposed in the inner space 4001 of the electronic device 400, and a third conductive portion 420h disposed at a position that enables coupling with the third antenna structure 4311c via a third split portion C3 around a third opening 4005 provided through the conductive member 420. In this case, the third opening 4003 may be used as a hole to accommodate a key input device (e.g., the key input device 217 in FIG. 2A). For example, at least two of the first substrate 430a, second substrate 430b, or third substrate 430c may be substantially the same or different substrates. In addition, at least one of the above-described antennas A-1, A-2, and A-3 may be omitted.

According to various embodiments, an electronic device (e.g., the electronic device 400 in FIG. 5A) may include a housing (e.g., the housing 410 in FIG. 5A) including a conductive member (e.g., the conductive member 420a in FIG. 5A) and a non-conductive member (e.g., the non-conductive member 420b in FIG. 5A) coupled to the conductive member, a conductive portion (e.g., the conductive portion 420c in FIG. 5A) split from the conductive member through at least one split portion (e.g., the split portion 420d in FIG. 5B), an antenna structure (e.g., the antenna structure 4311 in FIG. 5A) disposed in an inner space (e.g., the inner space 4001 in FIG. 5A) of the housing to be at least partially capacitively coupled to the conductive portion, and a wireless communication circuit (e.g., the wireless communication module 192 in FIG. 1) configured to transmit or receive a wireless signal in at least one predetermined frequency band via the antenna structure and the conductive portion. The conductive portion may be disposed to be invisible from the outside through the non-conductive member.

According to various embodiments, the at least one split portion may be filled with the non-conductive portion.

According to various embodiments, the at least one split portion may include a pair of split portions spaced apart at a predetermined interval, and the conductive portion may be separated from the conductive member through the pair of split portions.

According to various embodiments, the electronic device may further include a device substrate disposed in the interior space, and an antenna carrier disposed to at least partially overlap the device substrate. The antenna structure may be disposed on the antenna carrier.

According to various embodiments, the antenna structure may include a laser direct structuring (LDS) pattern provided on the antenna carrier.

According to various embodiments, the antenna structure may include a conductive plate or a flexible printed circuit board (FPCB) attached to the antenna carrier.

According to various embodiments, the antenna structure may be at least partially embedded in the antenna carrier made of an injection-molded material.

According to various embodiments, the wireless communication circuit may be disposed on the device substrate, and the antenna structure may be electrically connected to the wireless communication circuit through placement operation of the antenna carrier.

According to various embodiments, the electronic device may further a device substrate disposed in the inner space, and the antenna structure may include a conductive pattern disposed on the device substrate.

According to various embodiments, the electronic device may further include a dielectric frame member coupled to the lateral member, and the lateral member may be disposed to be invisible from the exterior through the frame member.

According to various embodiments, the conductive portion may be coupled to the non-conductive member and/or the frame member through an injection molding method.

According to various embodiments, the frame member may be made of a ceramic material.

According to various embodiments, the electronic device may further include a switching circuit disposed in an electrical path electrically interconnecting the wireless communication circuit and the antenna structure, the switching circuit being configured to selectively switch at least two matching elements, and a processor configured to control the switching circuit.

According to various embodiments, the lateral member may include an opening provided through at least a portion of the conductive member, and the conductive portion may be disposed on at least a portion of the conductive member provided with the opening.

According to various embodiments, the electronic device may further include at least one electronic component disposed in the inner space to be connected to an external environment through the opening.

According to various embodiments, the at least one electronic component may include at least one of a socket device, a speaker device, a microphone, or a connector port.

According to various embodiments, the electronic device may further include a display disposed in the inner space and disposed to be visible from the outside of the front cover through at least a portion of the housing.

According to various embodiments, an electronic device (e.g., the electronic device 400 in FIG. 3A) may include a housing (e.g., the housing 410 in FIG. 5A) including a front surface cover (e.g., the front surface cover 320 in FIG. 5A), a rear surface cover (e.g., the rear cover 380 in FIG. 5A) opposite to the front surface cover, and a lateral member (e.g., the lateral member 420 in FIG. 5A) disposed to surround the inner space (e.g., the inner space 4001 in FIG. 5A) between the front surface cover and the rear surface cover and including a conductive member (e.g., the conductive member 420a in FIG. 5A) and a non-conductive member (e.g., the non-conductive member 420b in FIG. 5A) coupled to the conductive member, a device substrate (e.g., the device substrate 430 in FIG. 5A) disposed in the inner space, a display (e.g., the display 330 in FIG. 5A) disposed in the inner space to be visible from the outside through at least a portion of the front surface cover, an antenna carrier (e.g., the antenna carrier 431 in FIG. 5A) disposed between the device substrate and the rear cover and including at least one antenna structure (e.g., the antenna structure 4311 in FIG. 5A), a conductive portion disposed to be coupled with the at least one antenna structure and split from the conductive member by at least one split portion, and a wireless communication circuit (e.g., the wireless communication module 192 in FIG. 5A) configured to transmit or receive a wireless signal in at least one predetermined frequency band via the antenna structure and the conductive portion. The conductive portion may be disposed to be invisible from the outside through the non-conductive member.

According to various embodiments, the at least one split portion may be filled with the non-conductive portion.

According to various embodiments, the electronic device may further include an opening provided through at least a portion of the conductive member and at least one electronic component disposed in the inner space to be connected to the external environment through the opening, and the conductive portion may be disposed on at least a portion of the conductive member provided with the opening.

The embodiments of the disclosure disclosed in this specification and drawings are provided merely to propose specific examples in order to easily describe the technical features according to the embodiments of the disclosure and to help understanding of the embodiments of the disclosure, and are not intended to limit the scope of the embodiments of the disclosure. Accordingly, the scope of the various embodiments of the disclosure is to be construed in such a manner that, in addition to the embodiments disclosed herein, all changes or modifications derived from the technical idea of the various embodiments of the disclosure are included in the scope of the various embodiments of the disclosure.

## Claims

1. An electronic device comprising:
a housing (410) comprising a lateral member (420) including a conductive member (420a) and a non-conductive member (420b) coupled to the conductive member;
a conductive portion (420c) split from the conductive member through at least one split portion (420d);
an antenna structure (4311) disposed in an inner space of the housing to be at least partially capacitively coupled to the conductive portion; and
a wireless communication circuit (192) configured to transmit or receive a wireless signal in at least one predetermined frequency band via the antenna structure and the conductive portion,
wherein the lateral member (420) comprises an opening (4002) provided through at least a portion of the conductive member (420a), and
wherein the conductive portion (420c) is disposed to be invisible from outside through the non-conductive member, on at least a portion of the conductive member (420a) provided with the opening (4002).

2. The electronic device of claim 1, wherein the at least one split portion is filled with the non-conductive portion.

3. The electronic device of claim 1, wherein the at least one split portion comprises a pair of split portions spaced apart at a predetermined interval, and
wherein the conductive portion is separated from the conductive member through the pair of split portions.

4. The electronic device of claim 1, further comprising:
a device substrate disposed in the interior space; and
an antenna carrier (431) disposed to at least partially overlap the device substrate,
wherein the antenna structure is disposed on the antenna carrier.

5. The electronic device of claim 4, wherein the antenna structure comprises a laser direct structuring, LDS, pattern provided on the antenna carrier.

6. The electronic device of claim 4, wherein the antenna structure comprises a conductive plate or a flexible printed circuit board, FPCB, attached to the antenna carrier.

7. The electronic device of claim 4, wherein the antenna structure is at least partially embedded in the antenna carrier made of an injection-molded material.

8. The electronic device of claim 4, wherein the wireless communication circuit is disposed on the device substrate, and
wherein the antenna structure is electrically connected to the wireless communication circuit through placement operation of the antenna carrier.

9. The electronic device of claim 1, further comprising a device substrate disposed in the inner space,
wherein the antenna structure comprises a conductive pattern disposed on the device substrate.

10. The electronic device of claim 1, further comprising a frame member made of a dielectric material coupled to the lateral member,
wherein the lateral member is disposed to be invisible from the outside through the frame member.

11. The electronic device of claim 10, wherein the conductive portion is coupled to the non-conductive member and/or the frame member through an injection molding method.

12. The electronic device of claim 10, wherein the frame member is made of a ceramic material.

13. The electronic device of claim 1, further comprising:
a switching circuit disposed in an electrical path electrically interconnecting the wireless communication circuit and the antenna structure, the switching circuit being configured to selectively switch at least two matching elements; and
a processor configured to control the switching circuit.

14. The electronic device of claim 1, further comprising at least one electronic component disposed in the inner space to be connected to an external environment through the opening.

## Patentansprüche

1. Elektronisches Gerät, umfassend:
ein Gehäuse (410), das ein Seitenteil (420), das ein leitendes Teil (420a) und ein nichtleitendes Teil (420b), das an das leitende Teil gekoppelt ist, beinhaltet, umfasst;
einen leitenden Abschnitt (420c), der von dem leitenden Teil durch zumindest einen geteilten Abschnitt (420d) geteilt ist;
eine Antennenstruktur (4311), die in einem Innenraum des Gehäuses angeordnet ist, um zumindest teilweise kapazitiv an den leitenden Abschnitt gekoppelt zu sein; und
eine drahtlose Kommunikationsschaltung (192), die dazu konfiguriert ist, ein drahtloses Signal in zumindest einem vorbestimmten Frequenzband über die Antennenstruktur und den leitenden Abschnitt zu übertragen oder zu empfangen,
wobei das Seitenteil (420) eine Öffnung (4002) umfasst, die durch zumindest einen Abschnitt des leitenden Teils (420a) bereitgestellt ist, und
wobei der leitende Abschnitt (420c) dazu angeordnet ist, von außen durch das nichtleitende Teil auf zumindest einem Abschnitt des leitenden Teils (420a), der mit der Öffnung (4002) bereitgestellt ist, unsichtbar zu sein.

2. Elektronisches Gerät nach Anspruch 1, wobei der zumindest eine geteilte Abschnitt mit dem nichtleitenden Abschnitt gefüllt ist.

3. Elektronisches Gerät nach Anspruch 1, wobei der zumindest eine geteilte Abschnitt ein Paar von geteilten Abschnitten umfasst, die in einem vorbestimmten Intervall beabstandet sind, und
wobei der leitende Abschnitt von dem leitenden Teil durch das Paar von geteilten Abschnitten getrennt ist.

4. Elektronisches Gerät nach Anspruch 1, ferner umfassend:
ein Gerätesubstrat, das in dem Innenraum angeordnet ist; und
einen Antennenträger (431), der dazu angeordnet ist, das Gerätesubstrat zumindest teilweise zu überlappen,
wobei die Antennenstruktur an dem Antennenträger angeordnet ist.

5. Elektronisches Gerät nach Anspruch 4, wobei die Antennenstruktur ein Laser-Direkt-Strukturierungs-, LDS-Muster umfasst, das auf dem Antennenträger bereitgestellt ist.

6. Elektronisches Gerät nach Anspruch 4, wobei die Antennenstruktur eine leitende Platte oder eine flexible Leiterplatte, FPCB, umfasst, die an dem Antennenträger angebracht ist.

7. Elektronisches Gerät nach Anspruch 4, wobei die Antennenstruktur zumindest teilweise in den Antennenträger eingebettet ist, der aus einem spritzgegossenen Material hergestellt ist.

8. Elektronisches Gerät nach Anspruch 4, wobei die drahtlose Kommunikationsschaltung auf dem Gerätesubstrat angeordnet ist, und
wobei die Antennenstruktur durch Platzierungsoperation des Antennenträgers elektrisch mit der drahtlosen Kommunikationsschaltung verbunden ist.

9. Elektronisches Gerät nach Anspruch 1, ferner umfassend ein Gerätesubstrat, das in dem Innenraum angeordnet ist,
wobei die Antennenstruktur ein leitendes Muster umfasst, das auf dem Gerätesubstrat angeordnet ist.

10. Elektronisches Gerät nach Anspruch 1, ferner umfassend ein Rahmenteil, das aus einem dielektrischen Material hergestellt ist, das an das Seitenteil gekoppelt ist,
wobei das Seitenteil dazu angeordnet ist, von außen durch das Rahmenteil unsichtbar zu sein.

11. Elektronisches Gerät nach Anspruch 10, wobei der leitende Abschnitt an das nichtleitende Teil und/oder das Rahmenteil durch ein Spritzgussverfahren gekoppelt ist.

12. Elektronisches Gerät nach Anspruch 10, wobei das Rahmenteil aus einem Keramikmaterial hergestellt ist.

13. Elektronisches Gerät nach Anspruch 1, ferner umfassend:
eine Schaltschaltung, die in einem elektrischen Pfad angeordnet ist, der die drahtlose Kommunikationsschaltung und die Antennenstruktur elektrisch miteinander verbindet, wobei die Schaltschaltung dazu konfiguriert ist, zumindest zwei passende Elemente selektiv zu schalten; und
einen Prozessor, der dazu konfiguriert ist, die Schaltschaltung zu steuern.

14. Elektronisches Gerät nach Anspruch 1, ferner umfassend zumindest eine elektronische Komponente, die in dem Innenraum angeordnet ist, um mit einer externen Umgebung durch die Öffnung verbunden zu sein.

## Revendications

1. Dispositif électronique comprenant :
un boîtier (410) comprenant un élément latéral (420) comprenant un élément conducteur (420a) et un élément non conducteur (420b) couplé à l'élément conducteur ;
une partie conductrice (420c) séparée de l'élément conducteur par au moins une partie fendue (420d) ;
une structure d'antenne (4311) disposée dans un espace intérieur du boîtier de manière à être au moins partiellement couplée de manière capacitive à la partie conductrice ; et
un circuit de communication sans fil (192) conçu pour transmettre ou recevoir un signal sans fil dans au moins une bande de fréquence prédéterminée par l'intermédiaire de la structure d'antenne et de la partie conductrice,
dans lequel l'élément latéral (420) comprend une ouverture (4002) ménagée à travers au moins une partie de l'élément conducteur (420a), et
dans lequel la partie conductrice (420c) est disposée de manière à être invisible de l'extérieur à travers l'élément non conducteur, sur au moins une partie de l'élément conducteur (420a) pourvue de l'ouverture (4002).

2. Dispositif électronique de la revendication 1, dans lequel l'au moins une partie fendue est remplie de la partie non conductrice.

3. Dispositif électronique de la revendication 1, dans lequel l'au moins une partie fendue comprend une paire de parties fendues espacées d'un intervalle prédéterminé, et
dans lequel la partie conductrice est séparée de l'élément conducteur par la paire de parties fendues.

4. Dispositif électronique de la revendication 1, comprenant en outre :
un substrat de dispositif disposé dans l'espace intérieur ; et
un support d'antenne (431) disposé de manière à chevaucher au moins partiellement le substrat de dispositif,
dans lequel la structure d'antenne est disposée sur le support d'antenne.

5. Dispositif électronique de la revendication 4, dans lequel la structure d'antenne comprend un motif de structuration directe par laser, LDS, prévu sur le support d'antenne.

6. Dispositif électronique de la revendication 4, dans lequel la structure d'antenne comprend une plaque conductrice ou une carte de circuit imprimé flexible, FPCB, fixée au support d'antenne.

7. Dispositif électronique de la revendication 4, dans lequel la structure d'antenne est au moins partiellement noyée dans le support d'antenne constitué d'un matériau moulé par injection.

8. Dispositif électronique de la revendication 4, dans lequel le circuit de communication sans fil est disposé sur le substrat de dispositif, et
dans lequel la structure d'antenne est électriquement connectée au circuit de communication sans fil par une opération de placement du support d'antenne.

9. Dispositif électronique de la revendication 1, comprenant en outre un substrat de dispositif disposé dans l'espace intérieur,
dans lequel la structure d'antenne comprend un motif conducteur disposé sur le substrat de dispositif.

10. Dispositif électronique de la revendication 1, comprenant en outre un élément de cadre constitué d'un matériau diélectrique couplé à l'élément latéral,
dans lequel l'élément latéral est disposé de manière à être invisible de l'extérieur à travers l'élément de cadre.

11. Dispositif électronique de la revendication 10, dans lequel la partie conductrice est couplée à l'élément non conducteur et/ou à l'élément de cadre par un procédé de moulage par injection.

12. Dispositif électronique de la revendication 10, dans lequel l'élément de cadre est constitué d'un matériau céramique.

13. Dispositif électronique de la revendication 1, comprenant en outre :
un circuit de commutation disposé dans un chemin électrique interconnectant électriquement le circuit de communication sans fil et la structure d'antenne, le circuit de commutation étant configuré pour commuter sélectivement au moins deux éléments d'adaptation ; et
un processeur configuré pour commander le circuit de commutation.

14. Dispositif électronique de la revendication 1, comprenant en outre au moins un composant électronique disposé dans l'espace intérieur de manière à être connecté à un environnement externe par l'intermédiaire de l'ouverture.
